# EUROPEAN PATENT SPECIFICATION

(11) **EP 0 392 040 B1**
(45) Date of publication and mention of the grant of the patent: **20.07.1994**
(21) Application number: 89106399.2
(22) Date of filing: 11.04.1989
(51) Int. Cl.: C03B 19/10

(54) **Method of producing spherical products**
Verfahren zum Herstellen von kugelförmigen Gegenständen
Procédé pour la fabrication de produits sphériques

(43) Date of publication of application: 17.10.1990
(73) Proprietor: ASAHI FIBER GLASS COMPANY LIMITED, Tokyo (JP)
(72) Inventor: Yamatsuta, Kiichi, Kouza-gun Kanagawa-ken (JP); Goto, Shoji, Kouza-gun Kanagawa-ken (JP); Shimizu, Satoshi, Sagamihara-shi Kanagawa-ken (JP)
(74) Representative: Wächtershäuser, Günter, Prof. Dr.

(56) References cited:
- DE-A- 1 696 586
- FR-A- 2 249 049
- US-A- 2 616 124

## Description

The present invention relates to a method of producing spherical products such as glass balls.

Glass balls are prepared by melting particles of glass by heat, forming the molten glass into spherical products through the action of surface tension and cooling the spherical products. In this case, in order to prevent thus obtained glass balls from melt-bonding to each other, various proposals have been made. For instance, the glass particles are mixed with carbon powder and the mixture is heated so that the disadvantage of a mutual melt-bonding phenomenon can be avoided. However, the conventional techniques have the problems as follows.
(1) Operations are troublesome and productivity is low.
(2) The size of the spherical glass products is determined by the size of the glass particles used. However, it is difficult to obtain the glass particles having a size correctly in a predetermined range. For this reason, operations such as classification or screening are needed to obtain the spherical glass products having a predetermined size. As a result, the yield may be reduced.

As other proposals, there are a method wherein a hot gas is blown to molten glass streams at a high speed to break the glass streams so that the broken glass streams are formed into spherical bodies by the action of surface tension (Japanese Examined Patent Publication No. 20713/1967 and Japanese Unexamined Patent Publication No. 24596/1967) and a method wherein molten glass is formed into a thin film, a hot gas is blown to the thin film molten glass at a high speed to break the same, whereby the broken pieces of molten glass are formed into spherical products by the action of surface tension (Japanese Examined Patent Publication No. 27086/1974). However, it is difficult to obtain spherical glass products having an extremely small diameter and having a uniform size.

DE-A-1696586 describes a process whereby Molten glass is fed to a bowl through a feeding pipe while an expansion agent is fed to the bowl through another feeding pipe to thereby effect expansion in the molten glass. A partition wall having an opening is provided at the upper part of the bowl to thereby prevent the non-expansion molten glass from coming-up. Further, orifices are formed at a rotatable outer wall above the bowl so that the expanded glass is caused to flow through the orifices. When the outer wall is rotated, glass streams flowing through the orifices are chopped by the centrifugal action caused by the rotation of the outer wall. The chopped glass pieces are cooled in an outer chamber. During the above-mentioned process, a mineral powder is supplied through a nozzle into the outer chamber so as to prevent mutual adherence of the chopped expanded glass pieces. With this process it is not possible to form spherical glass products.

The present invention is to eliminate the above-mentioned problems. Hereinbelow, description will be made mainly as to a method of producing spherical glass products.

Short glass fibers have been widely used for heat insulating materials and sound absorbing materials, and have been produced in a large scale. As a typical method of producing the short glass fibers, molten glass is supplied in a C-shaped channel-like spinner with an open upper surface and a large number of orifices formed in its circumferential wall, the spinner is rotated to produce a centrifugal force to thereby discharge streams of molten glass through the orifices while a hot combustion gas is blown to the circumferential surface of the spinner.

In the study to obtain glass fibers having a small diameter by using a centrifugal method, the inventors of this application have found that spherical glass products can be obtained by specifying operating conditions by using the centrifugal method to be in a specified range.

Further, they have found that the method according to the present invention produces not only spherical products of glass but also spherical products of heat-softened material such as plastics.

It is therefore an object of the present invention to provide a method of producing spherical products of a heat-softened material such as glass having a small and uniform diameter in an industrial manner.

In accordance with the present invention, this object is achieved by the method of Claim 1.

In the drawings:
Figure 1 is a longitudinal cross-sectional view of an embodiment of the spinner used for the present invention, and
Figures 2 and 3 are respectively enlarged cross-sectional views of an important part of the spinner shown in Figure 1.

Preferred embodiments of the present invention will be described with reference to the drawings.

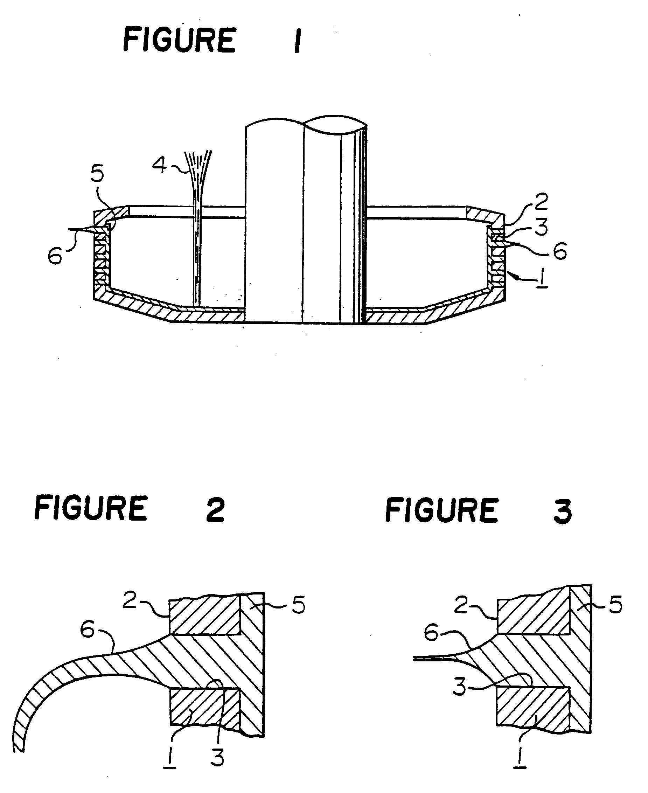

In Figure 1, a spinner 1 constituted by a C-shaped channel-like member having the upper surface opened is used for the method of the present invention. The spinner 1 has a substantially vertical cylindrical circumferential wall 2 (hereinbelow, referred to as circumferential wall). The wall thickness of the circumferential wall 2 is preferably uniform, then, the spinner 1 can be easily manufactured. A large number of orifices 3 are formed in the circumferential wall.

The diameter or the orifices 3 is determined depending on the diameter of a desired spherical glass products. The diameter of the glass products can be selected by selecting the condition of operations described below.

Molten glass is supplied to the spinner 1 through a molten glass supplying conduit or the like (not shown) which is provided at the upper part of the spinner 1. In this case, a rate of a supply of the molten glass per hour is determined to be 0.020 kg/hr or lower per single orifice in the spinner, preferably in a range of 0.01 kg-0.001 kg/hr per single orifice in the spinner.

In the present invention, it is preferable that the number of the revolutions of the spinner 1 is determined to be in a range of 500 rpm - 5,000 rpm, preferably 1,000 rpm - 3,000 rpm, and the temperature of the molten glass is so determined that the viscosity of the molten glass to be supplied to the spinner 1 is in a range of 5 Pa·s(50 poise) -400 Pa·s(4,000 poise) preferably,10 Pa·s(100 poise) - 200 Pa·s 2,000 poise.

Due to a centrifugal force produced by the revolution of the spinner 1, the molten glass in the spinner 1 is discharged through the orifices 3 and is attenuated, so that club-shaped or cone-like fine streams 6 of molten glass are formed. A hot gas is blown to the fine glass streams 6 so as to traverse them, whereby the fine streams 6 of the molten glass are heated and the viscosity is rapidly reduced. As the hot gas stream, a hot combustion gas is preferably used. The hot combustion gas is supplied through a combustion gas feeder (not shown) opened at the upper part of the circumferential wall 2 of the spinner 1 to the downward direction along the outer circumference of the spinner 1.

In the centrifugal method to produce glass fibers by using the spinner in the conventional technique, the molten glass is discharged through the orifices formed in the spinner and the hot combustion gas is discharged downwardly along the outer circumference of the spinner in the same manner as the method of the present invention. As described before, the present invention uses the same spinner as used in a method for producing glass fibers; however, the conditions for its operation are specified in specified ranges, whereby spherical glass products having a small diameter can be obtained with narrow distribution in diameter.

Detailed description will be made as to this specified conditions.

As the first condition, the molten glass is supplied at a rate of 0.020 kg or lower per hour with respect to a single orifice of the spinner, preferably in a range of 0.01 - 0.001 kg/hr. The molten glass 4 in the spinner 1 is subjected to a centrifugal force produced by the rotation of the spinner 1. As a result, the molten glass is urged to the inside surface of the spinner so that a layer 5 of the molten glass is formed. Then, the molten glass 4 flows through the orifices 3 by the centrifugal force, whereby fine streames 6 of the molten glass of a tapered or a cone-like form are produced. The thickness of the molten glass layer 5 becomes larger as the amount of supply of the molten glass 4 is greater, whereby a driving force to cause the molten glass to discharge through the orifices 3 of the spinner 1 is large, with the result that relatively long and fine molten glass streams having a smaller top angle of cone are formed. When an amount of supply of the molten glass 4 is small, the thickness of the molten glass layer 5 is small to thereby reduce the above-mentioned driving force. Accordingly, relatively shorter fine molten glass streams 6 having a larger top angle of cone are formed. In the former case, the molten glass streams 6 are further attenuated by directing then downwardly along the direction of a gas stream formed by a hot gas ejected downwardly, whereby glass fibers having a relatively small diameter (about 7 »m in diameter) are formed. Under the above-mentioned condition, spherical glass products are not produced.

As the second condition to produce the spherical glass products, streams of a hot gas are blown so as to traverse the fine streams 6 of the molten glass so that the fine streams are heated to thereby rapidly reduce the viscosity of the glass. Such condition can be accomplished by increasing the temperature of the hot gas and by reducing the flow rate of the hot gas. The flow rate of the hot gas is preferably 50 m/sec or lower, preferably 40 m/sec or lower, most preferably in a range of 40 - 10 m/sec.

The temperature of the hot gas is preferably so determined as to be higher than 200°C + T, more preferably in a range of T + 300°C ∼ T + 700°C where T is an average temperature of the outer surface of the spinner (hereinbelow, referred to as a surface temperature) which is measured by an optical pyrometer in a state that the molten glass is flowing.

The average temperature T [although it is difficult to measure directly the average temperature of the molten glass at the outlet of the orifices of the spinner (hereinbelow referred to as the temperature of glass at the outlet) during fiberizing operations, it is considered that the temperature of glass at the outlet is substantially equal to the temperature of the outer surface of the spinner], it is especially preferable that operational conditions of the temeperature of the hot gas, a feeding rate of molten glass and so on are determined so that the viscosity of the molten glass is in a range of 10-500 Pa·s(100 - 5,000 poise), preferably 40-300 Pa·s (400 - 3,000 poise). The temperature in the above-mentioned range of viscosity varies depending on the composition of the glass. For instance, the temperature of the glass having the composition described below is in a range of 980°C - 1,150°C.

| | |
|---|---|
| SiO₂ | 61 wt% |
| R₂O | 14 wt% |
| RO | 15 wt% |
| B₂O₃ | 6 wt% |
| Al₂O₃ | 4 wt% |

When the above-mentioned conditions are satisfied, the fine streams 6 of the molten glass flowing through the orifices 3 flows traversing the hot gas streams, whereby the viscosity is rapidly reduced and the fine streams are broken by the action of the hot gas streams. Although the mechanism of breaking the fine streams is not made clear, it is considered that the shape of the top portion of the fine streams 6 of the molten glass becomes unstable under the given conditions and the shape of the end portion is apt to change due to the fluctuation in temperature and the flow rate of the hot gas at the outer surface of the spinner and so on; thus causing the breaking of the fine streams.

When the temeprature of the hot gas is too low, the viscosity of the molten glass can not satisfactorily be reduced. Accordingly, the breaking of the fine streams 6 of the molten glass is insufficient, and a good result can not be obtained. When the flow rate of the hot gas is too large, a good result can not also be obtained. Namely, the flow rate of the hot gas is large in comparison with the moving speed of the fine streams 6 of the molten glass in the horizontal direction due to the centrifugal force, whereby the fine streams 6 of the molten glass move along the streams of the hot gas, with the result that the function of the hot gas streams traversing the fine streams 6 of the molten glass can not effectively be obtained, and the breaking of the fine stream 6 can not be satisfactory. Further, the rapid reduction of the viscosity can not be obtained because of a time exposing the fine streams 6 of the molten glass to a high temperature portion is short. Accordingly, the production of glass beads of a good quality can not be achieved.

As described above, by supplying the molten glass in the spinner having an open upper surface and a large number of orifices in its circumferential surface at a rate of 0.020 kg or lower per hour with respect to a single one of the orifices, preferably in a range of 0.01 - 0.001 kg per hour for one orifice; by rotating the spinner at a high speed to cause the molten glass to flow through the orifices 3 by the action of a centrifugal force so as to form fine streams 6 of the molten glass having a cone-like shape; and by blowing streams of a hot gas so as to traverse the fine streams 6 of the molten glass so that the fine streams 6 of the molten glass are heated to thereby rapidly reduce the viscosity of glass, the fine streams 6 of the molten glass are broken by the action of the hot gas streams. The broken fine streams 6 of the molten glass are transformed into spherical glass beads by surface tension produced in the glass. Thus, spherical glass products having a small diameter can be produced with a high efficiency in an industrial scale without any dispersion of diameter. In this case, conditions for the operations such as the temperature and the flow rate of the hot gas are determined depending on a kind of glass to be used and the size of spherical glass porducts. Influence by the number of revolutions of the spinner is relatively small. A good result can be obtained by determining the number of the revolution to be in a range of 500 rpm - 5,000 rpm, preferably, 1,000 rpm - 3,000 rpm.

The above-mentioned explanation concerns a method of producing spherical glass products made of glass containing a large content of R₂O which is used for producing short glass fibers. In accordance with the method of the present invention, however, spherical glass products can be produced by using E-glass having high melting temperature, Pb glass having a low melting temperature. Particularly, hollow spherical glass products can be produced by using glass which can be foamed at a high temperature proposed to produce glass balloons (hollow glass beads), for example, glass containing about 0.3% of SO₃.

Although description has been made as to a method of producing the spherical glass products by using molten glass, spherical products can be produced by using a heat softened material such as plastics.

When the spinner is rotated at a high speed under the above-mentioned conditions of operation, streams of a molten material flowing through the orifices of the spinner due to a centrifugal force become extremely unstable, and the streams are broken by the action of hot gas streams, whereby the broken streams are formed into small spherical products by surface tension.

### EXAMPLE 1

Glass having the composition of:

| | |
|---|---|
| SiO₂ | 61 wt% |
| R₂O | 14 wt% |
| RO | 15 wt% |
| B₂O₃ | 6 wt% |
| Al₂O₃ | 4 wt% |

was operated under the following conditions:

| | |
|---|---|
| Number of orifices | 6,000 |
| Amount of molten glass per a single one of the orifices (kg/hr) | 0.005 |
| Temperature of molten glass to the spinner (°C) | 1,250 |
| Number of revolution | 2,500 |
| Temperature of combustion gas (°C) | 1,450 |
| Speed of combustion gas (m/sec) | 40 |

### EXAMPLE 2

Glass having the composition of:

| | |
|---|---|
| SiO₂ | 60.7 wt% |
| R₂O | 14 wt% |
| RO | 15 wt% |
| B₂O₃ | 6 wt% |
| Al₂O₃ | 4 wt% |
| SO₃ | 0.3 wt% |

was operated under the following conditions:

| | |
|---|---|
| Number of orifices | 6,000 |
| Amount of molten glass per a single one of the orifices (kg/hr) | 0.005 |
| Temperature of molten glass to the spinner (°C) | 1,200 |
| Number of revolution | 2,500 |
| Temperature of combustion gas (°C) | 1,250 |
| Speed of combustion gas (m/sec) | 40 |

Glass baloons were stablly obtained for a long time with narrow distribution of the diameter.

As the combustion gas, it is preferable to use one of a reducing atmosphere which is obtained by incomplete burning.

## Claims

1. A method of producing spherical products of a heat-softened material which comprises: supplying a molten heat-softened material (4) into the interior of a spinner (1) of the rotary cup type having a bottom wall and a circumferential wall (2) with a large number of orifices (3) formed in it, at a rate of 0.020 kg/hr or lower per single orifice of the spinner, which is rotated about its vertical axis at a high speed to form cone-like fine streams (6) of the molten material from the orifices by means of centrifugal force, the supply rate of the molten material and the temperature, and thus the viscosity, of the molten material in the spinner being such that relatively short molten glass streams are formed having a relatively large top angle of cone, and flowing streams of a hot gas with a flow velocity lower than 50 m/sec and with a temperature of more than T + 200°C, T being the average outer surface temperature of the spinner so as to traverse the fine streams of molten material to thereby heat the same resulting in reducing the viscosity of the molten material and to break the fine streams by the hot gas streams, whereby the broken fine streams are transformed into spherical products by surface tension.

2. The method of producing spherical products according to Claim 1 , wherein the heat-softened material (4) is glass.

3. The method of producing spherical products according to Claim 2, wherein the glass is formed at a high temperature.

## Patentansprüche

1. Verfahren zum Herstellen kugelförmiger Produkte aus einem wärmeerweichten Material, das umfaßt:
Zuführen eines wärmeerweichten Materials (4) in das Innere einer Spinnvorrichtung (1) der Art mit einem Rotationsbecher, der eine Bodenwand und eine Umfangswand (2) mit einer großen Anzahl darin ausgebildeter Öffnungen (3) aufweist, mit einer Rate von 0,020 kg/h oder weiger pro Einzelöffnung in der Spinnvorrichtung, die mit einer hohen Geschwindigkeit um ihre vertikale Achse routiert, um kegelförmige feine Ströme (6) aus dem geschmolzenen Material mittels Zentrifugalkraft aus den Öffnungen zu bilden, wobei die Zufuhrrate des geschmolzenen Materials und die Temperatur und damit die Viskosität des geschmolzenen Materials in der Spinnvorrichtung derart sind, das relativ kurze Ströme aus geschmolzenem Glas mit einem relativ großen spitzen Winkel des Kegels gebildet werden und Ströme aus einem heißen Gas mit einer Strömungsgeschwindigkeit von weniger als 50 m/s und mit einer Temperatur von mehr als T + 200°C, wobei T die mittlere Temperatur der Außenoberfläche der Spinnvorrichtung ist, durch die feinen Ströme aus geschmolzenem Material zu blasen, um diese dadurch aufzuheizen, was die Viskosität des geschmolzenen Materials verringert, und die feinen Ströme durch die Ströme aus heißem Gas aufzubrechent, wobei die aufgebrochenen feinen Ströme durch die Oberflächenspannung in kugelförmige Produkte umgewandelt werden.

2. Verfahren zum Herstellen kugelförmiger Produkte nach Anspruch 1, worin das wärmeerweichte Material (4) Glas ist.

3. Verfahren zum Herstellen kugelförmiger Produkte nach Anspruch 2, worin das Glas bei einer hohen Temperatur geformt wird.

## Revendications

1. Procédé pour fabriquer des produits sphériques en un matériau ramolli par la chaleur, qui comprend les étapes consistant: à introduire, à l'intérieur d'une filière centrifuge (1) du type à coupelle rotative, comportant une paroi de fond et une paroi périphérique (2) dans laquelle des orifices (3) sont pratiqués en grand nombre, un matériau ramolli par la chaleur (4), à l'état fondu, sous un débit de 0,020 kg/h, ou moins, par orifice individuel de la filière, laquelle est entraînée en rotation autour de son axe vertical, à une vitesse élevée, pour produire, sous l'effet de la force centrifuge, de minces filets (6) de matériau fondu, en forme de cônes, à travers les orifices, la vitesse d'introduction du matériau fondu ainsi que la température, et donc la viscosité, du matériau fondu, dans la filière, étant telles que des filets de verre fondu, relativement courts, sont produits sous la forme de cônes d'angle au sommet relativement grand, et à insuffler des jets de gaz chaud, sous une vitesse d'écoulement inférieure à 50 m/s et à une température de plus de T+200°C, T étant la température moyenne de la surface extérieure de la filière centrifuge, d'une manière telle qu'ils traversent les minces filets de matériau fondu afin que ces derniers soient chauffés, avec pour résultat une réduction de la viscosité du matériau fondu, et que les minces filets soient rompus par les jets de gaz chaud, les minces filets rompus étant transformés en produits sphériques sous l'effet de leur tension superficielle.

2. Procédé pour fabriquer des produits sphériques selon la revendication 1, dans lequel le matériau ramolli par la chaleur (4) est du verre.

3. Procédé pour fabriquer des produits sphériques selon la revendication 2, dans lequel le verre est élaboré à une température élevée.
